# EUROPÄISCHE PATENTSCHRIFT

(11) **EP 2 390 121 B1**
(45) Veröffentlichungstag und Bekanntmachung des Hinweises auf die Patenterteilung: **06.03.2013**
(21) Anmeldenummer: 11165906.6
(22) Anmeldetag: 12.05.2011
(51) Int. Cl.: B60G 17/015, B60G 17/033, B60G 5/04

(54) **Nutzfahrzeuganhänger und Steuereinrichtung für Luftfederanordnung**
Commercial vehicle trailer and control device for pneumatic spring assembly
Remorque de véhicule utilitaire et dispositif de commande pour agencement de ressort pneumatique

(30) Priorität: 31.05.2010 DE 102010017172; 01.09.2010 DE 102010037260; 22.09.2010 DE 102010037700
(43) Veröffentlichungstag der Anmeldung: 30.11.2011
(73) Patentinhaber: Schmitz Cargobull Gotha GmbH, 99867 Gotha (DE)
(72) Erfinder: Eberle, Reinhard, 89155 Erbach (DE); Volz, Siegfried, 89610 Oberdischingen (DE); Dumpich, Sven, 99867 Gotha (DE)
(74) Vertreter: Baur & Weber Patentanwälte

(56) Entgegenhaltungen:
- EP-A1- 1 557 305
- EP-A2- 1 571 015
- EP-A2- 2 275 287
- DE-A1- 2 348 089
- DE-A1- 4 402 182
- DE-A1- 19 718 258
- DE-A1- 19 721 130
- DE-A1- 19 801 546
- GB-A- 2 356 608

## Beschreibung

Die Erfindung betrifft einen Nutzfahrzeuganhänger und eine Steuereinrichtung für eine Luftfederanordnung in einem solchen Anhänger.

Mehrachsige Nutzfahrzeuganhänger mit frontseitiger Abstützung eines Teils des Anhängergewichts an einer Kupplungsanordnung sind insbesondere als Zentralachsanhänger und Sattelauflieger-Anhänger gebräuchlich. Zentralachsanhänger mit Tandemachse enthalten eine erste und eine zweite Achse mit jeweils an gegenüber liegenden Seiten angeordneten Rädern, wobei die beiden Achsen bezüglich der Längsrichtung des Anhängers nahe beieinander liegend ungefähr in der Fahrzeugmitte liegen. Die Achsen sind nicht gelenkt und die Zugdeichsel ist bezüglich des Chassis in unveränderlicher Richtung ausgerichtet. Die Achsen sind gegenüber dem Chassis des Anhängers durch eine Luftfederanordnung federnd abgestützt. Mittels der Luftfederanordnung kann das Chassis durch Zuführen oder Ablassen von Druckluft in bzw. aus Luftfederbälgen relativ zu den Achsen in der Höhe verstellt werden. Insbesondere kann für den Fahrbetrieb eine Fahrhöhe des Chassis über der Fahrbahn eingestellt werden, was automatisch mittels einer Steuereinrichtung erfolgen kann, welcher ein Signal eines Höhensensors zugeleitet ist, und welche zur Ansteuerung von Druckluftventilen eingerichtet ist, um die von dem Höhensensor gemessene Höhe auf eine Sollhöhe einzustellen. Die in Fahrtrichtung vorne liegende erste Achse kann als Liftachse ausgeführt sein, welche bei geringer Achslast angehoben sein kann. Bei abgesenkter Liftachse sind die Luftfedern beider Achsen mit einheitlichem Luftdruck beaufschlagt. Bekannt sind ferner auch Zentralachsanhänger mit einer Tridem-Achsanordnung, welche drei in Längsrichtung bei der Anhängermitte nahe beieinander liegende Achsen aufweist.

Nutzfahrzeuganhänger mit luftgefederten Achsen sind insbesondere auch bei Sattelauflieger-Anhängern gebräuchlich, wobei die Achsen an dem der Sattelkupplung entgegen gesetzten Heck des Anhängers liegen und insbesondere bei drei Achsen die in Fahrtrichtung erste Achse als Liftachse ausgeführt sein kann. In der EP 2 138 333 A1 oder der EP 2 168 788 A1 ist vorgeschlagen als Anfahrhilfe die Sattelstützlast vorübergehend zu erhöhen, indem die Achslast der ersten Achse durch Entlüften der zugeordneten Luftfederbälge verringert und dadurch Kraft auf die Sattelplatte verlagert wird.

Ein Verfahren zur Anfahrhilfesteuerung ist auch aus der EP 1 571 015 A2 bekannt. Dabei kann nach einer anfänglichen Bestimmung der aktuellen Achslastgewichtskräfte eine Auflieger-Anfahrhilfe aktiviert werden. Mit der Auflieger-Anfahrhilfe wird sukzessive eine vordere von wenigstens zwei Auflieger-Achsen schrittweise entlastet, wodurch die Sattelstützlast und mit dieser die Achslast der Triebachse des Zugfahrzeugs erhöht und die Traktion des Zugfahrzeugs verbessert wird. Während der sukzessiven Entlastung der vorderen Aufliegerachse wird nach jedem Entlastungsschritt überprüft, ob die maximal zulässige Achslast an der Triebachse erreicht ist. Die schrittweise Erhöhung der Zugfahrzeug-Traktion wird beendet, wenn die maximal zulässige Achslast an der Triebachse erreicht oder die vordere Aufliegerachse vollständig entlastet ist.

Die Anfahrhilfe stellt eine von den Bestimmungen für den Fahrbetrieb befreite Ausnahmesituation dar und muss automatisch beendet werden, bevor das Fahrzeug eine Geschwindigkeitsschwelle von derzeit 30 km/h erreicht.

Ein sogenanntes "Load Spread Programm" der Schmitz Cargobull AG sieht vor, die in Fahrtrichtung letzte, hinterste Achse durch Balgentlüftung zu entlasten, um die Stützlast an der Sattelkupplungsplatte zu verringern. Belastete Achsen sind mit untereinander gleichem Luftdruck der zugeordneten Luftfederanordnungen beaufschlagt. Die Anfahrhilfe und das Load-Spead-Programm sind vom Benutzer der Zugfahrzeug-Auflieger-Kombination einstellbar.

Während Sattelauflieger-Anhänger durch den großen frontseitigen Überhang über die Radachsen immer mit hoher Last auf der Sattelkupplung aufliegen, ist bei Zentralachsanhängern das Gesamtgewicht weitgehend auf den Zentralachsen abgestützt. Zentralachsanhänger sind im Fahrbetrieb frontseitig mit einer Zugdeichsel in einem Kupplungsmaul eines Zugfahrzeugs gehalten und mit einer Stützkraft, für welche ein Bereich von beispielsweise 2, 5kN bis 10 kN zulässig vertikal abgestützt ist. Für die Einhaltung des Stützkraftbereichs ist bei variierender Beladung des Anhängers auf eine angemessene Verteilung des Ladeguts zu achten.

Die DE 44 02 182 A1 beschreibt einen mit einer Deichsel in ein Kupplungsmaul eines Zugfahrzeugs einhängbaren Zentralachsanhänger. Die Deichsel ist gelenkig mit dem Fahrgestell des Anhängers verbunden und im Gelenkbereich ist eine Kraftmesseinrichtung angeordnet, mittels welcher ein zur Stützlast der Deichsel am Kupplungsmaul proportionaler Kraftwert bestimmbar ist. Durch veränderbare Einstellung der Achslast wenigstens einer Anhängerachse kann auch bei Verlagerung der Ladung des Anhängers eine gewünschte Kupplungs-Stützlast eingehalten werden. Die Unterteilung des Anhängerchassis für die Kraftmessung zwischen Deichsel und Fahrgestell ist aber konstruktiv nachteilig.

In der DE 197 21 130 A1 ist ein Ladewagen mit mehreren, unabhängig voneinander höhenverstellbaren Achsen beschrieben.

In der DE 197 18 258 A1 ist ein Zentralachs- oder Sattelanhänger beschrieben, bei welchem zur Vermeidung einer überhöhten Kupplungs-Stützlast bei frontlastiger Beladung eine Steuerung der Luftfederanordnung der mehreren Anhängerachsen in der Art vorgeschlagen ist, dass bei abnehmendem Gesamtgewicht, z. B. durch sukzessive Entladung des Anhängers der Luftdruck in der Federanordnung der ersten von zwei Tandemachsen beibehalten und nur der Luftdruck der Federanordnung der zweiten Achse reduziert wird.

Um auch bei einer unvermeidbaren Heckbelastung des Anhängers wie beispielsweise einem am Heck außerhalb der Ladefläche gehaltenen sogenannten Mitnahmestapler eine Mindeststützkraft einhalten zu können, kann in zur DE 197 18 258 A1 umgekehrter Weise der Luftdruck in der Federanordnung der zweiten Achse bei abnehmendem Gesamtgewicht beibehalten und nur der Luftdruck der Federanordnung der ersten Achse reduziert werden.

Die Beladungssituation kann aber so variieren, dass trotz eines Mitnahmestaplers am Heck eine hohe Kupplungs-Stützlast oder auch ohne Mitnahmestapler eine zu geringe Kupplungs-Stützlast auftritt und eine automatische Steuerprogramm-Auswahl zu einer ungünstigen Steuerung der Achsbelastungen führen kann. Eine Auswahl eines Steuerprogramms durch den Benutzer setzt eine richtige Bewertung der Lastverteilung durch den Benutzer voraus.

Der vorliegenden Erfindung liegt die Aufgabe zugrunde, einen mehrachsigen, an einer Kupplungsanordnung an einem Zugfahrzeug abstützbaren Nutzfahrzeuganhänger und eine Steuereinrichtung zur Steuerung einer Luftfederanordnung eines solchen Anhängers anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die über einen Teilbereich oder vorzugsweise den gesamten Bereich des möglichen Gesamtgewichts des Anhängers mögliche getrennte Beaufschlagung der Teilfederanordnungen mit lastabhängig zwischen den wenigstens zwei Teilfederanordnungen verschiedenen Luftdrücken, welche jeweils einer der Achsen der Mehrfach-Achsanordnung zugeordnet sind, lässt sich auf besonders einfache und vorteilhafte Weise unter Verwendung von ohnehin vorhandenen steuerbaren Druckluftventilen eine günstigere Verteilung des Gesamtgewichts des Anhängers auf die Stützlast an der Kupplungsanordnung und die mehreren Achsen der Mehrfachachsanordnung erreichen und die Fahrsicherheit der Zugfahrzeug-Anhänger-Kombination im Mittel verbessern, insbesondere die Gefahr besonders kritischer Situationen verringern. Insbesondere kann ein für den jeweiligen Anhängertyp und/oder Zugfahrzeug vorgegebener Wertebereich für die Stützkraft an der Kupplungsanordnung eingehalten werden. In vorteilhafter Weiterbildung kann innerhalb eines solchen vorgegebenen Bereichs ein optimierter Wert für die Stützkraft eingestellt werden.

Als unbelastete Achse sei nachfolgend eine Achse bezeichnet, welche entweder bei Ausführung als Liftachse angehoben ist oder bei welcher die Luftbalge der Luftfederanordnung nur mit einem minimalen, für einen sicheren Bodenkontakt der Räder dieser Achse erforderlichen Restdruck beaufschlagt sind. Die Tragkraft einer in diesem Sinne entlasteten Achse sei vernachlässigt.

Zur gezielten Steuerung der Luftdrücke in den Luftbalgen der Luftfederanordnungen sind steuerbare Ventile, Drucksensoren und elektronische Steuereinrichtungen bei Anhängern mit Mehrfach-Achsanordnungen an sich bekannt, so dass weitgehend auf vorhandene Komponenten zurückgegriffen werden kann.

Ein von Gesamtgewicht des Anhängers und/oder von der Längsposition des Schwerpunkts abhängiger Messwert sei ein Messwert einer Messgröße, welche sich bei Veränderung des Gesamtgewichts und/oder der Schwerpunktposition gleichfalls ändert. Eine solche Messgröße kann insbesondere die Achslast einer Achse oder ein damit korrelierter Wert, insbesondere ein Luftdruckwert sein.

Unter dem Gesamtgewicht des Anhängers sei dabei und im folgenden, soweit nicht explizit anders angegeben oder aus dem Zusammenhang entnehmbar, das gefederte Gewicht, also ohne die Eigengewichte der Achsen und Räder, welche die Messwerte nicht beeinflussen, verstanden. Eine angehobene Liftachse zählt wiederum zum gefederten Gewicht.

Als ein gefederter Zustand oder Federzustand des Chassis oder der Teilfederanordnungen sei ein Zustand verstanden, in welchem die Teilfederanordnungen weder vollständig ausgefedert oder vollständig eingefedert sind.

Im nachfolgenden sei unter der Angabe eines zunehmenden oder abnehmenden Gesamtgewichts die angenommene Situation verstanden, dass durch Erhöhen oder Verringern der Zuladung des Anhängers sich dessen aus Leergewicht und Zuladung zusammen gesetztes Gesamtgewicht ändert, wobei zur Erläuterung von einer quasikontinuierlichen gleitenden Variation ausgegangen sei, welche auch einer Steuervorschrift in der Steuereinrichtung zugrunde liegen kann. Ein Mitnahmestapler sei dabei gleichfalls als Zuladung in diesem Sinne verstanden.

Die Steuereinrichtung führt einen Messdurchlauf und dabei die Ermittlung von Messwerten zu einer gegebenen Beladungssituation durch und leitet aus solchen Messwerten nach abgespeicherten Auswertungsvorschriften Steuerwerte für Soll-Druckwerte zum Fahrbetrieb für jede der beiden Luftfederanordnungen ab und steuert die Steuerventile zur Einstellung dieser abgeleiteten Soll-Druckwerte entsprechend an, wobei solche Soll-Druckwerte insbesondere zur Einstellung der Stützlast an der Kupplung des Zugfahrzeugs auf einen für die gegebene Beladungssituation zulässigen oder günstigen Wert oder Bereich ausgerichtet sind. Zulässige Wertebereiche sind durch Zulassungsvorschriften für Anhängertypen vorgegeben. Innerhalb solcher zulässigen Stützlast-Bereiche kann vorteilhafterweise noch eine auf die aktuelle Beladungssituation optimierte Stützlast eingestellt werden. Die Messwerte können insbesondere Werte des Luftdrucks in den beiden Luftfederanordnungen sein, wobei vorteilhafterweise in einem Messdurchlauf mehrere unterschiedliche Messzustände eingestellt werden, welche sich in Wertepaaren der Druckwerte der hinteren Luftfederanordnung und der vorderen Luftfederanordnungen bzw. den Verhältnissen der Druckwerte unterscheiden und Messvorgänge bei den mehreren verschiedenen Messzuständen ausgeführt werden.

Beispielsweise kann ein erstes Druckwertepaar als gleiche Druckwerte bei einheitlicher Druckbeaufschlagung beider Luftfederanordnungen ermittelt werden. Andere Wertepaare können bei in den beiden Luftfederanordnungen ungleichen Luftdrücken bestimmt werden. Ein zweites Druckwertepaar kann beispielsweise durch Vorgabe eines maximalen oder minimalen Drucks für die hintere Luftfederanordnung und Messung des dabei erforderlichen Druckwerts in der vorderen Luftfederanordnung, ein drittes Wertepaar durch Vorgabe eines maximalen oder minimalen Druckwerts für die vordere Luftfederanordnung und Messung des dabei erforderlichen Drucks in der hinteren Luftfederanordnung bestimmt werden. Für weitere Druckverhältnisse können weitere Druckwertepaare bestimmt werden.

Die Ermittlung von Druckwerten als Messwerte erfolgt dabei immer im Federungsbereich der Luftfederanordnungen, bei welchen die jeweils betrachtete Achse durch die Luftfederanordnung sich in gefedertem Zustand befindet, also nicht an festen Endanschlägen der zulässigen Achsbewegung anliegt. Insbesondere kann für die Druckmessung bei verschiedenen Druckverhältnissen jeweils eine definierte Höhenlage einer Achse relativ zu dem Chassis des Anhängers eingestellt werden, wie dies auch bei der gebräuchlichen Druckeinstellung mit einheitlicher Druckbeaufschlagung geschieht. Die Mittel zur Messung der Höhenlage einer Achse sind in der Regel bei einer steuerbaren Luftfederung bereits vorhanden. Die definierte Höhenlage kann vorteilhafterweise gleich der Fahrhöhe im Fahrbetrieb sein.

Für die Ermittlung von getrennten, an eine bestimmte Beladungssituation angepassten Soll-Druckwerten für die beiden Luftfederanordnungen können auch Messwerte aus dem Zugfahrzeug, insbesondere Druckmesswerte von einer Luftfederanordnung der Hinterachse des Zugfahrzeugs herangezogen und über Datenleitungen mit den Druckmesswerten von den Luftfederanordnungen des Anhängers verknüpft werden. Insbesondere können Messwerte aus dem Zugfahrzeug Änderungen in der Stützlast an der Anhängerkupplung bei Veränderung einer Messsituation im Anhänger anzeigen. Vorteilhafterweise ermöglicht die Erfindung aber eine autarke Ermittlung von Soll-Druckwerten bzw. diesen zugeordneten Steuerwerten ohne Kooperation mit zugfahrzeugseitigen Lastmesseinrichtungen. Die erfindungsgemäßen Anhänger können damit an beliebigen Zugfahrzeugen betrieben werden.

Die Messwerte, Steuerwerte oder aus diesen gewonnene weitere Informationen können vorteilhafterweise einem Benutzer im Zugfahrzeug mittels Datenübertragungs- und Anzeigemitteln anzeigbar sein. Insbesondere können auch unzulässige Betriebszustände wie Überladung und/oder Fälle, in welchen die Stützlast nicht auf einen zulässigen Wert einstellbar ist, ermittelbar und, gegebenenfalls mit einem zusätzlichen Warnsignal, anzeigbar sein. Bei Ermittlung eines für Fahrbetrieb unzulässigen Betriebszustands kann auch automatisch eine Wegfahrsperre auslösbar sein, z. B. durch Aktivierung einer Feststellbremse. Die Messwerte und/oder Steuerwerte aus einem Messdurchlauf können vorteilhafterweise in der Steuereinrichtung speicherbar und m it in einem neuen Messdurchlauf gewonnenen Mess- bzw. Steuerwerten vergleichbar sein. Veränderungen können als Information einem Benutzer im Zugfahrzeug anzeigbar sein.

Die im Hinblick auf eine günstige oder zumindest zulässige Kupplungslast auf eine bestimmte Beladungssituation abgestimmten separaten und in den meisten Situationen unterschiedlichen Druckwerte für die Teilfederanordnungen der mehreren Achsen im Fahrbetrieb hängen insbesondere von dem Gesamtgewicht des Anhängers und von der Längsposition des Schwerpunkts bei der gegebenen Beladungssituation ab, welche a priori unbekannt sind. Die günstigste Kupplungslast kann wiederum von der jeweiligen Zuladungssituation des Anhängers abhängen. Die Stützlast der Kupplung am Zugfahrzeug bildet eine weitere a priori unbekannte Größe, so dass bei der Ableitung von einzustellenden Druckwerten eine hinreichende Anzahl von Messwerten zu bestimmen und auszuwerten ist.

Eine Steuerungsvorschrift, nach welcher die jeweiligen beladungsabhängigen Soll-Druckwerte für die Teilfederanordnungen aus den Messwerten in der Steuereinrichtung abgeleitet werden, kann in Tabellenform oder anhand einer Rechenvorschrift oder einer Mischform von beiden vorliegen. Bei Verwendung einer Rechenvorschrift können die Längspositionen der von den mehreren Achsen und von der Kupplung auf das Anhängerchassis stützend wirkenden Kräfte als bekannt und unveränderlich vorgegeben werden. Die Ableitung von im Hinblick auf eine günstige Stützlast an der Kupplung geeigneten Soll-Druckwerten stellt typischerweise eine Optimierungsaufgabe dar. Für die Lösung von Optimierungsaufgaben sind verschiedene Ansätze, beispielsweise eine Minimierung einer Fehlerquadratsumme bekannt. Eine Mischform von Rechenvorschrift und Tabelle kann insbesondere in der Form vorliegen, dass aus den Messwerten nach einer Rechenvorschrift Werte für das Gesamtgewicht und für die Längsposition des Schwerpunkts des Anhängers geschätzt werden und diese Schätzwerte zum Auslesen von Steuerwerten aus einer Tabelle dienen.

Die Gewinnung von Messwerten zur Ableitung von an eine Beladungssituation angepassten Soll-Druckwerten erfolgt durch die Steuereinrichtung beispielsweise durch ein vom Benutzer auslösbares Startsignal zu einem Messdurchlauf oder automatisch bei durch die Steuereinrichtung erkennbar geänderter Beladungssituation. Ein Messdurchlauf kann auch automatisch ausgelöst werden bei einem Start des Zugfahrzeugs nach einer Stillstandszeit vorgebbarer Mindestdauer. Die Gewinnung von Messwerten erfolgt vorteilhafterweise bei auf im wesentlichen ebener Fläche aufstehendem Anhänger.

Die Steuereinrichtung ist vorzugsweise im Anhänger selbst angeordnet, kann aber auch im Zugfahrzeug angeordnet sein oder Komponenten im Zugfahrzeug und im Anhänger enthalten.

Die vorstehend zu einem Anhänger mit zwei Achsen einer für einen Zentralachs-Anhänger typischen Mehrfach-Achsanordnungen sind analog auch auf einen Anhänger mit einer Mehrfach-Achsanordnung mit drei gefederten Achsen übertragbar, wie dies bei Tridem-Zentralachsanhängern und insbesondere bei gebräuchlichen Sattel-Auflieger-Anhängern gegeben ist. Die dritte Achse kann vor der ersten, hinter der zweiten oder zwischen der ersten und der zweiten Asche im Sinne der vorangegangenen Ausführungen angeordnet sein. Eine der dritten Achse zugeordnete dritte Teilfederanordnung kann durch eine Steuereinrichtung mit von den anderen Teilfederanordnungen getrennten Luftdruck beaufschlagt sein oder kann durch pneumatische Kopplung mit der ersten oder der zweiten Teilfederanordnung mit einem dazu gleichen Luftdruck beaufschlagt sein.

Die Mehrfach-Achsanordnung, insbesondere eine 3-fach-Achsanordnung kann auch wenigstens eine Liftachse enthalten. Bei Vorliegen einer Liftachse kann diese im abgesenkten Zustand vorteilhaft mit der mittleren von drei Achsen auf einen gemeinsamen Druckwert gesetzt sein.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Tandemachsanhänger,
- Fig. 2: ein Schema wesentlicher Kräfte bei einem Anhänger nach Fig. 1,
- Fig. 3: eine schematische Darstellung pneumatischer Komponenten,
- Fig. 4: ein Ablaufschema mit Druckmessungen,
- Fig. 5: ein Kräfteschema bei einem Sattelauflieger

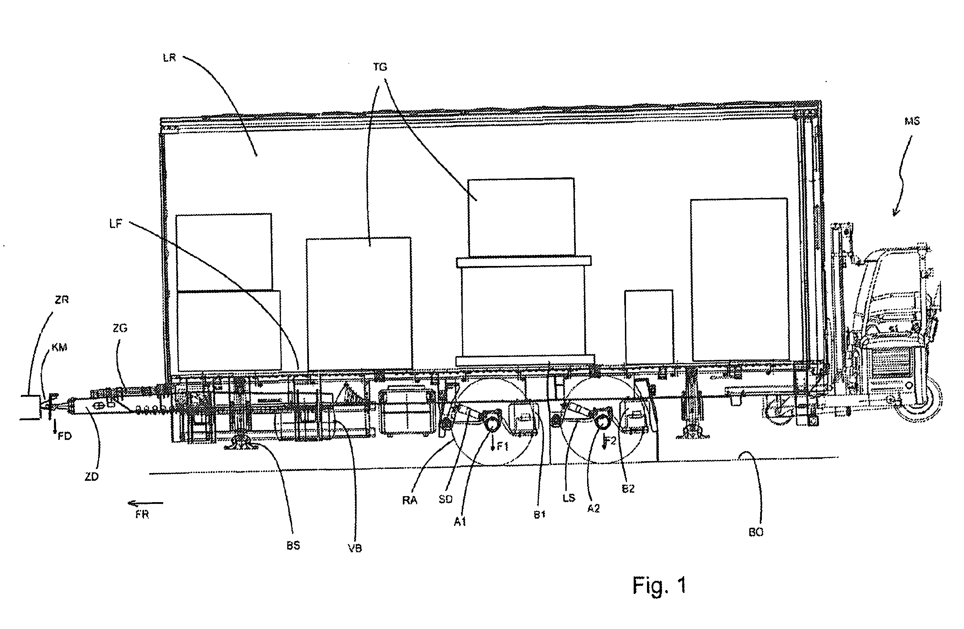

Fig. 1 zeigt in Seitenansicht eine typische Ausführung eines Zentralachsanhängers mit Tandemachse. Eine Seitenplane ist entfernt und gibt den Blick in einen Laderaum LR frei, in welchem Transportgut TG angeordnet ist. In Fahrtrichtung vorne ist eine Zugdeichsel ZD mit einem Kupplungsauge in einem Kupplungsmaul KM eines Zugfahrzeugs gehalten, wobei von dem Zugfahrzeug lediglich ein kurzer Abschnitt des Fahrzeugrahmens ZR dargestellt ist.

Räder RA des Fahrwerks des Anhängers sind in einer Tandemachsanordnung mit einer ersten Achse A1 und einer zweiten Achse A2 gelagert, wobei die erste Achse A1 in Fahrtrichtung FR vorne und die zweite Achse A2 in geringem Abstand hinter der ersten Achse angeordnet ist. Die Achsen sind in gebräuchlicher Weise an Radschwingen RS befestigt. Die Radschwingen RS sind in Schwingenlagern SL um horizontale, senkrecht zur Zeichenebene der Fig. 1 verlaufende Schwenkachsen schwenkbar in Lagerböcken des Anhängerchassis aufgehängt und an ihrem den Schwingenlagern SL entgegen gesetzten Ende durch Luftfederbälge B1 bzw. B2 federnd gegen den Chassisrahmen AR des Anhängers abgestützt.

Die Luftfederbälge sind über in Fig. 1 nicht mit eingezeichnete Ventile und Druckluftleitungen mit einem Druckluft-Vorratsbehälter VB verbunden und über die steuerbaren Druckluftventile kann Druckluft aus dem Vorratsbehälter VB in die Federbälge B1, B2 eingeleitet oder Druckluft aus den Federbälgen B1, B2 ins Freie abgeleitet werden.

Ein in Fig. 1 gleichfalls nicht dargestellter Höhensensor liefert an eine Steuereinrichtung ein Höhensensorsignal, welches die Höhe des Chassisrahmens AR über der Fahrbahn BO repräsentiert. Für den Fahrbetrieb regelt die Steuereinrichtung durch Zufuhr oder Abfuhr von Druckluft in die bzw. aus den Druckluftbälgen B1, B2 die Höhe auf einen Sollwert einer Fahrhöhe ein, wobei der Luftdruck in den Federbälgen mit zunehmender Achslast zunimmt und umgekehrt. Die Höhenmessung über Sensoren und die Höhenregelung über steuerbare Druckluftventile ist gebräuchlich und in verschiedenen Ausführungen bekannt. Der Luftdruck in den Federbälgen ist geringer als der Luftdruck im Vorratsbehälter VB. Zur Begrenzung des Luftdrucks in den Federbälgen auf einen Maximalwert kann ein Druckminderer zwischen Vorratsbehälter VB und Federbälgen B1, B2 eingefügt sein. In Fig. 1 ist dargestellt, dass am Heck des Anhängers ein Flurförderfahrzeug in Form eines sogenannten Mitnahmestaplers angehängt ist. Dieser Mitnahmestapler verschiebt den Gesamtschwerpunkt des Anhängers gegenüber der Situation ohne den Mitnahmestapler MS nach hinten.

Auf der Deichsel ZD sind Zusatzgewichte ZG angedeutet, mittels welchen der Schwerpunkt des gesamten Anhängers in Fahrtrichtung nach vorne verlagert werden kann.

Das Gesamtgewicht des Anhängers wird zum überwiegenden Teil durch die auf die Achsen A1, A2 wirkenden Kräfte F1 und F2 sowie zu einem geringeren Teil durch eine Stützkraft FD, mit welcher die Zugdeichsel auf dem Kupplungsmaul KM lastet, abgefangen. Für die Stützlast FD kann beispielsweise ein zulässiger Bereich von 2,5 kN bis 10 kN vorgegeben sein. Die maximalen Achslastkräfte F1, F2 sind demgegenüber wesentlich höher und liegen beispielsweise bei jeweils 90 kN.

Über absenkbare Bodenstützen BS kann der Anhänger in einer Parkposition vom Zugfahrzeug getrennt aufgestellt sein. Die erste Achse A1 kann als sogenannte Liftachse ausgeführt und bei geringer Beladung des Anhängers mit ihren Rädern vollständig von der Fahrbahn BO abgehoben sein, wobei dann das Gewicht des Anhängers einschließlich der angehobenen Liftachse allein durch die Achslastkraft F2 der zweiten Achse und durch die Stützkraft FD am Kupplungsmaul KM abgefangen ist.

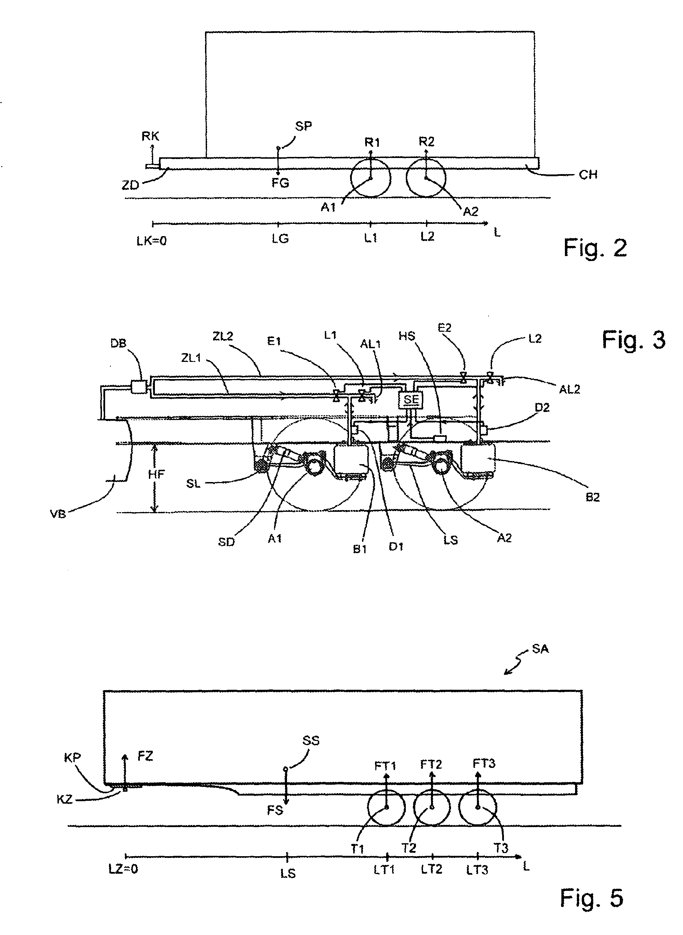

In Fig. 2 sind die für die weitere Erläuterung der Erfindung wesentlichen Kräfte, welche bei auf im wesentlichen ebenem Grund stehendem Zentralanhängers auf diesen statisch einwirken
- als der Stützlast FD an der Zugdeichsel ZM entgegen gerichtete Stützkraft RK der Anhängerkupplung des Zugfahrzeugs
- als den Achslasten F1 und F2 entgegen gerichtete Stützkräfte R1 und R2 der beiden Achsen und
- als Gewichtskraft FG im Schwerpunkt SP der gefederten Anhängermasse

eingezeichnet. Zu den Wirkungspositionen der einzelnen Kräfte sind jeweils deren Längspositionen als Koordinaten LK, LG, L1, L2 einer zur Fahrtrichtung FR parallelen L-Achse eingetragen. Der L-Achsen-Nullpunkt ist auf die Kupplungsposition LK gelegt, also LK=O.

Mit den dargestellten Kräften lassen sich ein Kräftegleichgewicht FG=RK+R1+R2 und ein Momentengleichgewicht FGxLG=R1xL1+R2xL2, in welchem die Kupplungs-Stützlast wegen der Nullpunktswahl entfällt, aufstellen. Dabei sind L1 und L2 durch die Anhänger-Geometrie vorbekannt und R1, R2 als Messwerte ermittelbar. RK, FG und LG sind nicht bekannt. Damit ist offensichtlich ein Messwertepaar R1, R2 nicht ausreichend für eine Aussage über die Stützkraft RK, welche innerhalb eines vorgeschriebenen Bereichs liegen soll.

Die Erfindung macht sich zunutze, dass das statische Gleichgewicht des Anhängers mit unterschiedlichen Wertepaaren R1, R2 einstellbar ist, und stellt in einem Messdurchlauf mittels der Steuereinrichtung und von dieser ansteuerbar Druckluft-Komponenten unterschiedliche Messzustände ein, welche unterschiedliche Wertepaare R1, R2 als Kraftwerte aufweisen. Zu jedem unterschiedlichen Wertepaar ergeben sich neue Kraftgleichgewichte und Momentungleichgewichte, welche als Gleichungen eines in diesem Falle linearen Gleichungssystems aufgefasst werden können. Auch wenn bei jedem neuen Kräftegleichgewicht ein neuer unbekannter Wert der Kupplungs-Stützlast auftritt, lässt sich bereits mit drei Wertepaaren R1, R2 eine Schätzung der für alle Messzustände gleichbleibenden Größen FG, LG über z. B. eine Rechenvorschrift oder eine Iteration oder andere an sich bekannte Arten durchführen. Günstigenfalls ist eine Schätzung von Soll-Druckwerten auch bereits mit nur zwei Messzuständen möglich. Mit Kenntnis von Schätzwerten zu FG und LG kann für den Fahrbetrieb über Luftdruckwerte in den Teilfederanordnungen zu den beiden Achsen A1, A2 leicht ein Wertepaar R1, R2 als Achsstützkräfte eingestellt werden, bei welchem die Kupplungs-Stützkraft RK bzw. die betragsgleiche Stützlast FD innerhalb des zulässigen Bereichs liegt. Darüber hinaus kann mit Kenntnis von LG und FG auch noch ein Fahrbetriebszustand eingestellt werden, welcher für ein Wertepaar LG, FG zu einem z. B. in Fahrversuchen oder Simulationen als optimal eingestuften Fahrverhalten der Zugfahrzeug-Anhänger-Kombination führt.

Messwerte für R1, R2 können auf an sich bekannte unterschiedliche Arten, beispielsweise direkt über Kraftsensoren gewonnen werden. Vorzugsweise erfolgt die Ermittlung von Messwerten in Form von Druckwerten der Luftdrücke in den Federbälgen B1, B2 der den beiden Achsen zugeordneten Teilfederanordnungen. Die Druckwerte sind den Achsstützkräften R1, R2 bzw. Achslasten F1, F2 eindeutig zuordenbar und im wesentlichen zu diesen direkt proportional.

Fig. 3 zeigt einen vereinfachten Ausschnitt aus Fig. 1 mit dem Fahrwerk und den pneumatischen Komponenten zur Regelung der Fahrhöhe HF. Von dem Vorratsbehälter VB führt eine Druckluftleitung zu einem Druckbegrenzer DB, welcher den Luftdruck auf Druckluft-Zuleitungen ZL auf einen vorgegebenen Maximalwert begrenzt und hierdurch vermeidet, dass die Federbälge B1, B2 mit dem höheren Luftdruck aus dem Vorratsbehälter versehentlich beaufschlagt und dadurch beschädigt werden können. In die Druckluftzuleitungen ZL1 zu den ersten Federbälgen B1 der ersten Achse A1 sind erste steuerbare Einlassventile E1, in die Druckluftzuleitungen ZL2 zu den zweiten Federbälgen B2 der zweiten Achse in entsprechender Weise zweite steuerbare Einlaßventile E2 eingefügt. Durch Öffnen der Einlaßventile E1 oder E2 kann Druckluft in die ersten Federbälge B1 bzw. die zweiten Federbälge B2 eingeleitet werden. Von einer Leitungsverzweigung zwischen den Einlaßventilen und den Luftfederbälgen führen Ausgangsleitungen AL1, AL2 ins Freie. In die Ausgangsleitungen AL1, AL2 sind weitere steuerbare Auslaßventile L1 bzw. L2 eingefügt. Durch Öffnen der Auslaßventile L1 oder L2 kann Druckluft aus den Federbälgen B1 bzw. B2 abgelassen werden.

Eine Pneumatikanordnung der in Fig. 3 schematisch und lediglich beispielhaft dargestellten Art ermöglicht es, die beiden Achsen A1 und A2 bei allen auf der Fahrbahn abrollenden Rädern separat mit in der Regel unterschiedlichen Luftdrücken in den jeweils erste und zweite Teilfederanordnungen bildenden ersten Federbälgen B1 und zweiten Federbälgen B2 zu beaufschlagen. Hierdurch können zum einen verschiedene Messzustände der beschriebenen Art als auch ein aus einem Messdurchlauf abgeleiteter Betriebszustand eingestellt werden.

Die entsprechende Steuerung der Einlaßventile und Auslaßventile erfolgt über eine Steuereinrichtung SE, welcher als Ist-Größe eines Regelkreises beispielsweise in an sich bekannter Weise ein Höhensignal eines Höhensensors HS oder ein vergleichbares, eine Höhenposition repräsentierendes Messsignal zugeführt ist. Vorteilhafterweise sind zusätzlich Drucksensoren D1, D2 vorgesehen, welche die aktuellen Luftdrücke in den Luftfederbälgen B1 bzw. B2 messen und entsprechende Messwerte gleichfalls an die Steuereinrichtung SE leiten.

Die Anordnung nach Fig. 3 ist nur schematisch zu verstehen. Pneumatische Anlagen mit elektronischer Steuereinrichtung sind für luftgefederte Nutzfahrzeuganhänger in verschiedenen Ausführungen gebräuchlich. Ventile oder Sensoren können auch baulich mit der Steuereinrichtung vereint sein.

Erfindungsgemäß stellt die Steuereinrichtung während eines Messdurchlaufs wenigstens zwei unterschiedliche Messzustände ein, welche sich in den Luftdrücken in den Luftfederbälgen der den beiden Achsen A1 und A2 zugeordneten Teilfederanordnungen unterscheiden. Ein Ablaufschema für einen Messdurchlauf kann vorteilhafterweise in einem programmierbaren Speicher der Steuereinrichtung vorgegeben sein.

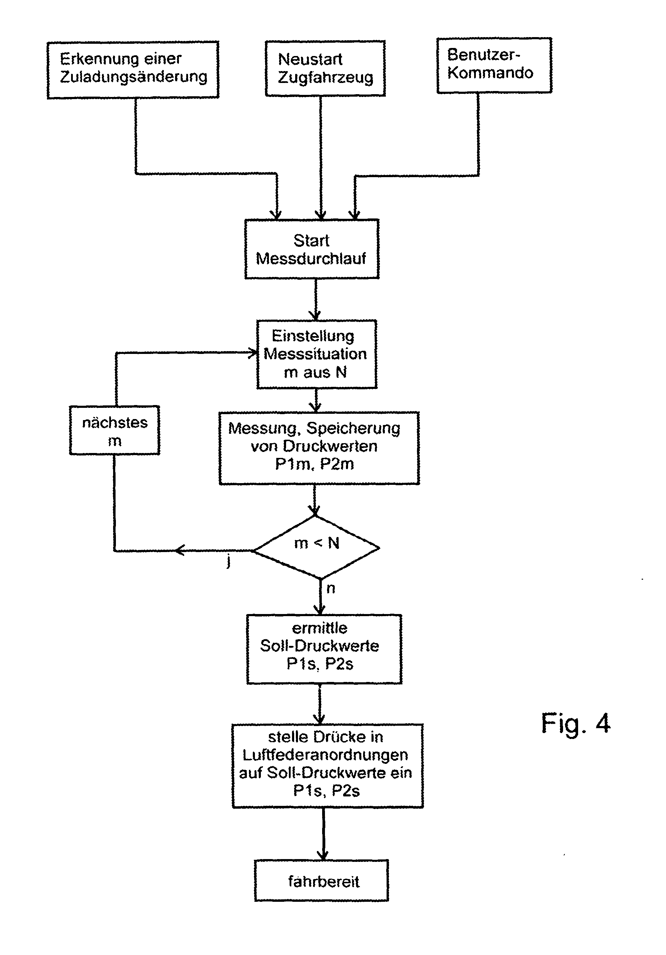

In Fig. 4 ist ein mögliches Ablaufschema für die flexible adaptive Ermittlung und Einstellung von Luftdrücken in den beiden Luftfederanordnungen skizziert. Eine Neueinstellung kann insbesondere nach einer selbsttätigen Erkennung einer Änderung der Zuladung durch die Steuereinrichtung, grundsätzlich nach dem Neustart des Zugfahrzeugs nach einer Mindestdauer einer Stillstandszeit und/oder ein explizites, durch einen Benutzer ausgelöstes Kommando veranlaßt sein. Nach einer solchen Auslösung startet die Steuereinrichtung einen Messdurchlauf, in welchem zu mehreren unterschiedlichen Messsituationen, deren Anzahl im Beispielsfall mit N angenommen sei, jeweils Messwerte ermittelt und gespeichert werden. Die verschiedenen Messsituationen unterscheiden sich in vorteilhafter Ausführung insbesondere durch die Verhältnisse der Luftdrücke P1 m in der ersten Luftfederanordnung und P2m in der zweiten Luftfederanordnung zum Messzeitpunkt. Die Messwerte sind typischerweise die dabei bestehenden Druckwerte. Die Messsituationen können beispielsweise eine Messsituation mit einheitlichen Druckwerten P1 = P2 und mehrere Messsituationen mit P1 < P2 und/oder P1 > P2 beinhalten. Nach Gewinnung von Messwerten zu einer Messsituation wird entweder zu einer weiteren, noch nicht eingestellten Messsituation gewechselt oder nach Durchlaufen aller vorgesehenen Messsituationen aus den gespeicherten Messwerten Soll-Druckwerte P1 S, P2S für die beiden Luftfederanordnungen ermittelt und danach die Drücke in den Luftfederanordnungen auf die derart bestimmten Soll-Druckwerte eingestellt. Danach ist der Anhänger fahrbereit mit einer für die gegebene Beladungssituation günstigen, insbesondere innerhalb eines zulässigen Bereichs liegenden Stützlast der Anhängerdeichsel in der Anhängerkupplung des Zugfahrzeugs. Die eingestellten Drücke in den Luftfederanordnungen werden im Fahrbetrieb beibehalten.

Beispielsweise kann bei einer Gesamtzahl N = 3 von unterschiedlichen Messzuständen in einem erster Messzustand (m=1) der Luftdruck in allen Luftbälgen B1, B2 der beiden Teilfederanordnungen auf denselben Wert eingestellt werden, wobei dieser einheitliche Druckwert primär von dem Gesamtgewicht des Anhängers und in geringem Maß von der Schwerpunktposition abhängig ist. Die beiden, in diesem Falle gleichen Druckwerte P11 der ersten Teilfederanordnung und P21 der zweiten Teilfederanordnung werden als ein erstes Wertepaar gespeichert. Für einen zweiten Messzustand (m=2) kann beispielsweise unter Beibehaltung der Fahrhöhe des Chassis der Luftdruck in den Luftbalgen B1 der ersten Teilfederanordnung abgesenkt und der Luftdruck in den Luftbalgen B2 der zweiten Teilfederanordnung angehoben werden. Die Druckveränderung kann beispielsweise so weit vorgenommen werden, bis entweder der Luftdruck in den Luftbalgen B1 einen vorgegebenen Minimalwert oder der Luftdruck in den Luftbalgen B2 einen Maximalwert erreicht, je nach dem, welcher der beiden Extremwerte zuerst erreicht wird. Nach Erreichen eines der beiden Extremwerte werden beide Luftdrücke als zweites Wertepaar mit P12 für die erste Teilfederanordnung und P22 für die zweite Teilfederanordnung gespeichert. Danach werden für eine dritte Messsituation (m=3) beispielsweise die Luftdrücke in der ersten und der zweiten Teilfederanordnung so verändert, dass der Luftdruck in den Luftbalgen B1 der ersten Teilfederanordnung erhöht und zugleich unter Beibehaltung der eingestellten Fahrhöhe der Luftdruck in den Luftbalgen B2 der zweiten Teilfederanordnung abgesenkt wird, bis wieder einer der beiden Luftdrücke einen der beiden vorgegebenen Extremwerte erreicht. Nach Erreichen eines der beiden Extremwerte werden wieder beide Luftdrücke gemessen und als drittes Wertepaar P13 für die erste Teilfederanordnung und P23 für die zweite Teilfederanordnung abgespeichert. Der Messdurchlauf ist dann mit m=N abgeschlossen und aus den drei vorliegenden Wertepaaren können Soll-Druckwerte für die erste und die zweite Teilfederanordnung abgeleitet werden, welche zu einer Stützlast auf die Zugdeichsel in dem Kupplungsmaul des Zugfahrzeugs führt, die einen gewünschten Wert annimmt bzw. in einem gewünschten Bereich liegt. Die Ableitung von Soll-Druckwerten aus mehreren Druckmessungen ist typischerweise eine Optimierungsaufgabe, welche auch Messfehlertoleranzen berücksichtigen kann. Es können auch mehr als drei Messsituationen innerhalb eines Messdurchlaufs eingestellt werden, wobei auch andere als die genannten Druckverhältnisse innerhalb der einzelnen Messsituationen einstellbar sind. Vorteilhaft ist es, wenn sich die Druckverhältnisse in den mehreren Messsituationen besonders stark voneinander unterscheiden, was durch die genannte Vorgehensweise mit Einstellung von Extremwerten in wenigstens zwei Messsituationen und einer einheitlichen Druckbeaufschlagung in einer weiteren Messsituation auf besonders vorteilhafte Weise erreicht wird.

Durch Wahl von Messzuständen, deren Druckwerte weniger stark von denen des ersten Messzustands abweichen, kann eine Variation der Kupplungs-Stützlast innerhalb des Messdurchlaufs kleiner gehalten werden, wenn die Gefahr einer Überlastung der Anhängerkupplung besteht. Es können auch anfänglich kleinere Veränderungen mit nachfolgend größeren Veränderungen der Druckwerte in weiteren Messzuständen vorgenommen werden.

Eine Auswertung des dynamischen Verhaltens der Luftdrücke in den beiden Federbälgen, beispielsweise als Differential dP1/dP2 mit P1 und P2 als Luftdrücke in den Federbälgen B1 und B2 bei gleitender Veränderung der Luftdrücke ist gleichfalls als Ermittlung und Auswertung von Messwerten in unterschiedlichen Messzuständen, welche dann im wesentlichen kontinuierlich ineinander übergehen, anzusehen.

Fig. 5 zeigt in zu Fig. 2 analoger Ansicht schematisch einen Sattelauflieger-Anhänger mit einer Dreifach-Achsanordnung mit Achsen T1, T2 und T3, welche über nicht im einzelnen eingezeichnete Teilfederanordnungen das Chassis und den Aufbau des Sattelauflieger-Anhängers gegen eine Fahrbahn abstützen. Die Achs-Stützkräfte sind mit FT1, FT2 und FT3 bezeichnet. Die Achspositionen auf einer zu Fig. 2 analogen L-Aachse sind mit LT1, LT2, LT3 bezeichnet. Der Sattelauflieger SA ist frontseitig mit einer Kupplungsplatte KP auf der Sattelkupplung eines in Fig. 5 nicht mit eingezeichneten Sattel-Zugfahrzeugs abgestützt. Die horizontale Arretierung erfolgt typischerweise über einen in die Sattelkupplung eingreifenden Königszapfen KZ. Die Stützkraft, mit welcher das Zugfahrzeug den Sattelauflieger-Anhänger frontseitig vertikal abstützt, ist mit FZ bezeichnet. Diese Stützkraft ist betragsgleich zu der Stützlast, mit welcher der Sattelauflieger im Kupplungsbereich auf die Sattelkupplung des Zugfahrzeugs drückt. Der Schwerpunkt der Gesamtgewichtskraft des gefederten Sattelaufliegers ist mit SS und die an der Längsposition LS wirkende vertikale Gewichtskraft mit FS bezeichnet. In zu dem anhand von Fig. 2 und Fig. 4 ausführlich beschriebenen Beispiel analoger Weise lassen sich auch in diesem Fall Kraftgleichgewichte FS = FZ + FT1 + FT2 + FT3 und Momentengleichgewichte FS x LS = FT1 x LT1 + FT2 x LT2 + FT3 x LT3 formulieren und durch Gewinnung von Messwerten bei unterschiedlichen Messzuständen sind in zu der 2-fach-Achsanordnung analogem Vorgehen Steuerwerte zur Einstellung von Soll-Druckwerten für den Fahrbetrieb des Sattelauflieger-Anhängers so ableitbar, dass die Stützkraft FZ bzw. die Stützlast an der Kupplung innerhalb eines zulässigen Bereichs liegt oder innerhalb eines solchen Bereichs auf einen als besonders günstig eingestuften Wert eingestellt ist. Bei dieser Einstellung auf einen besonders günstigen Wert innerhalb des Bereichs können beispielsweise weitere Kriterien wie das Bremsverhalten des Anhängers oder das Kurvenfahrverhalten in Abhängigkeit von Gewichtskraft FS und Schwerpunktposition LS berücksichtigt werden.

Insbesondere bei Sattelauflieger-Anhängern ist häufig eine der drei Achsen, typischerweise die vorderste Achse T1, als Liftachse ausgebildet. Die Messzustände innerhalb eines Messdurchlaufs können Situationen mit angehobener und/oder mit abgesenkter Liftachse enthalten. Bei angehobener Liftachse ist zu beachten, dass dann die Eigengewichte von Achse und Rädern dieser Liftachse den gefedertem Gesamtgewicht zugeschlagen werden müssen. Der Luftdruck in der mittleren Achse T2 kann durch Kopplung der jeweiligen pneumatischen Leitungen immer auf gleichem Luftdruck wie die vorderste Achse T1 oder die hinterste Achse T3 eingestellt sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Nutzfahrzeug-Anhänger
- mit einem durch Kupplungsmittel (ZD, KP) mit einer Stützlast (FD) an einem Zugfahrzeug abstützbaren Chassis (CH)
- mit einer Mehrfach-Achsanordnung, welche wenigstens eine erste, vordere Achse (A1) und eine zweiten hintere Achse (A2) enthält,
- mit einer das Chassis (CH) gegen die beiden Achsen abstützenden Luftfederanordnung (B1, B2), welche eine der ersten Achse (A1) zugeordnete erste Teilfederanordnung (B1) und eine der zweiten Achse (A2) zugeordnete zweite Teilfederanordnung (B2) enthält,
- mit einer Sensoranordnung, welche zur Messung der Achsstützkräfte (R1, R2) der beiden Achsen (A1, A2) eingerichtet ist,
- mit pneumatischen Steuermittein (E1, AL1, E2, AL2), welche zur getrennten Beaufschlagung der beiden Teilfederanordnungen eingerichtet sind,
- mit einer Steuereinrichtung (SE), welche zur Ansteuerung der Steuermittel zur EinsteNung veränderlicher Luftdruckwerte in den Teilfederanordnungen (B1, B2) für gefederte Zustände des Chassis eingerichtet ist, **dadurch gekennzeichnet, dass** die Steuereinrichtung zur Durchführung eines Messdurchlaufs eingerichtet ist und dabei mehrere Messwerte ermittelt, weiche vom Gesamtgewicht und/oder von der Längsposition des Schwerpunkts des Gesamtgewichts des Anhängers abhängen, und dass die Steuereinrichtung aus den Messwerten, nach einer gespeicherten Zuordnungsvorschrift Steuerwerte zur Einstellung Soll-Druckwerten von der Teilfederanordnungen für den Fahrbetrieb ableitet und die Drucke in den Luftfederanordnungen auf die Solf-Druckwerte einstellt.

2. Anhänger nach Anspruch 1, **dadurch gekennzeichnet, dass** die Zuordnungsvorschrift so vorgegeben ist, dass bei Einstellung der danach abgeleiteten Soll-Druckwerte die Stützlast an der Anhängerkupplung des Zugfahrzeugs innerhalb eines vorgegebenen zulässigen Bereichs liegt.

3. Anhänger nach Anspruch 1 oder 2, **dadurch gekennzeichnet, dass** die Steuereinrichtung während des Messdurchlaufs wenigstens zwei unterschiedliche gefederte Messzustände, welche sich in den Verhältnissen der Luftdrücke der Teilfederanordnungen unterscheiden, einstellt und Messwerte bei beiden Messzuständen ermittelt.

4. Anhänger nach einem der Ansprüche 1 bis 3, **dadurch gekennzeichnet, dass** die Steuereinrichtung Druckmesswerte der Luftdrücke in den Teilfederanordnungen als Messwerte ermittelt.

5. Anhänger nach einem der Ansprüche 1 bis 4, **dadurch gekennzeichnet, dass** jeder der beiden Teilfederanordnungen (B1, B2) wenigstens ein Drucksensor (D1, D2) zugeordnet ist, weicher zur Erzeugung eines von Luftdruck in der jeweiligen Teilfederanordnung abhängiges Messsignal an die Steuereinrichtung abgibt.

6. Anhänger nach einem der Ansprüche 1 bis 5, **dadurch gekennzeichnet, dass** die Steuereinrichtung erste Messwerte bei einem ersten Messzustand mit gleichen Luftdruckwerten in beiden Teilfederanordnungen ermittelt.

7. Anhänger nach einem der Ansprüche 1 bis 6, **dadurch gekennzeichnet, dass** die Steuereinrichtung zweite Messwerte bei wenigstens einem Messzustand mit zwischen den beiden Teilfederanordnungen verschiedenen Luftdrücken ermittelt.

8. Anhänger nach Anspruch 7, **dadurch gekennzeichnet, dass** die Steuereinrichtung nach Maßgabe der ersten Messwerte unterschiedliche Luftdrücke in den Teilfederanordnungen zur Ermittlung zweiter Messwerte einstellt.

9. Anhänger nach einem der Ansprüche 1 bis 8, **dadurch gekennzeichnet, dass** die Steuereinrichtung in einem Messdurchlauf bei wenigstens einem Messzustand mit größerem und einem Messzustand mit kleinerem Luftdruck in der ersten Teilfederanordnung gegenüber dem Luftdruck in der zweiten Teilfederanordnung Messwerte ermittelt.

10. Anhänger nach einem der Ansprüche 1 bis 9, **dadurch gekennzeichnet, dass** die Steuereinrichtung in einem Messdurchlauf bei wenigstens drei unterschiedlichen Messzuständen Messwerte ermittelt.

11. Anhänger nach einem der Ansprüche 1 bis 10, **dadurch gekennzeichnet, dass** die Steuereinrichtung Steuerwerte anhand einer gespeicherten tabellarischen Zuordnung von Messwerten zu Steuerwerten ableitet.

12. Anhänger nach einem der Ansprüche 1 bis 11, **dadurch gekennzeichnet, dass** die Steuereinrichtung Steuerwerte nach Maßgabe einer gespeicherten Optimierungsvorschrift aus den Messwerten oder von diesen abgeleiteten Werten ableitet.

13. Anhänger nach einem der Ansprüche 1 bis 12, **dadurch gekennzeichnet, dass** ein Messdurchlauf über ein Bedienelement kommandierbar ist.

14. Anhänger nach einem der Ansprüche 1 bis 13, **dadurch gekennzeichnet, dass** ein Messdurchlauf nach Maßgabe eines oder mehrere vordefinierbarer Ereignisse automatisch durch die Steuereinrichtung einleitbar ist.

15. Anhänger nach Anspruch 14, **dadurch gekennzeichnet, dass** ein Messdurchlauf nach Wegfall und erneutem Anschluss einer elektrischen Stromversorgung und/oder einer Druckluftversorgung aus einem Zugfahrzeug einleitbar ist.

16. Anhänger nach Anspruch 14 oder 15, **dadurch gekennzeichnet, dass** ein Messdurchlauf nach Stillstand des Anhängers über eine vorgebbare Mindestzeit automatisch einleitbar ist.

17. Anhänger nach einem der Ansprüche 1 bis 16, **dadurch gekennzeichnet, dass** die Einleitung eines Messdurchlaufs bei fahrendem Anhänger gesperrt ist.

18. Anhänger nach einem der Ansprüche 1 bis 17, **dadurch gekennzeichnet, dass** Steuerwerte und/oder Messwerte in der Steuereinrichtung speicherbar und Veränderungen in einem aktuellen Messdurchlauf gegenüber gespeicherten Werten zu einem vorangegangenen Messdurchlauf auswertbar und/oder anzeigbar sind.

19. Anhänger nach einem der Ansprüche 1 bis 18, **dadurch gekennzeichnet, dass** in dem Fall, dass sich aus der Ableitung der Steuerwerte ergibt, dass keine Fahrbetriebseinstellung der Teilfederanordnungen mit einer zulässigen Stützlast möglich ist, die Steuereinrichtung ein Warnsignal veranlasst und/oder eine Wegfahrsperre auslöst.

20. Anhänger nach einem der Ansprüche 1 bis 19, **dadurch gekennzeichnet, dass** eine dritte Achse mit einer dritten Teilfederanordnung vorhanden ist.

21. Anhänger nach Anspruch 20, **dadurch gekennzeichnet, dass** die dritte Teilfederanordnung durch die Steuereinrichtung getrennt steuerbar und/oder dass zu der dritten Achse Messwerte getrennt ermittelbar sind.

22. Anhänger nach Anspruch 21, **dadurch gekennzeichnet, dass** die dritte Teilfederanordnung mit demselben Luftdruck wie die erste oder die zweite Teilfederanordnung beaufschlagbar ist.

23. Anhänger nach einem der Ansprüche 1 bis 22, **dadurch gekennzeichnet, dass** der Anhänger ein Zentralachsanhänger mit einer Deichselkupplung ist.

24. Anhänger nach einem der Ansprüche 1 bis 23, **dadurch gekennzeichnet, dass** der Anhänger ein Sattelauflieger mit einer Sattelkupplungsplatte ist.

25. Steuereinrichtung zur Steuerung einer Luftfederanordnung mit wenigstens zwei Teilfederanordnungen in einem Nutzfahrzeug-Anhänger nach einem der vorangehenden Ansprüche.

## Claims

1. Commercial vehicle trailer
- (ZD, KP) having a chassis (CH) which can be supported on a traction vehicle with a supporting load (FD) using a coupling means (ZD, KP)
- having a multiple axle assembly which contains at least a first, front axle (A1) and a second, rear axle (A2),
- having a pneumatic spring assembly (B1, B2) which can support the chassis (CH) against the two axles and which contains a first component spring assembly (B1) assigned to the first axle (A1) and a second component spring assembly (B2) assigned to the second axle (A2),
- having a sensor assembly which is configured to measure the axle supporting forces (R1, R2) of the two axles (A1, A2),
- having pneumatic control means (E1, AL1, E2, AL2), which are configured to act on the two component spring assemblies separately,
- having a control device (SE) which is configured to actuate the control means in order to set variable air pressure values in the component spring assemblies (B1, B2) for sprung states of the chassis, **characterized in that** the control device is configured to carry out a measuring pass and in the process determines a plurality of measured values which depend on the total weight and/or on the longitudinal position of the centre of gravity of the total weight of the trailer, and **in that** the control device derives, in accordance with a stored assignment rule, control values from the measured values in order to set setpoint pressure values of the component spring assemblies for the driving mode and sets the pressures in the pneumatic spring assemblies to the setpoint pressure values.

2. Trailer according to Claim 1, **characterized in that** the assignment rule is predefined in such a way that, when the subsequently derived setpoint pressure values are set, the supporting load bears on the trailer coupling of the traction vehicle within a predefined permissible region.

3. Trailer according to Claim 1 or 2, **characterized in that** during the measuring pass the control device has at least two different sprung measuring states which differ in the ratios of the air pressures of the component spring assemblies, and said control device determines measured values in the two measuring states.

4. Trailer according to one of Claims 1 to 3, **characterized in that** the control device determines pressure measuring values of the air pressures in the component spring assemblies as measured values.

5. Trailer according to one of Claims 1 to 4, **characterized in that** each of the two component spring assemblies (B1, B2) is assigned at least one pressure sensor (D1, D2) which outputs to the control device in order to produce a measurement signal which is dependent on air pressure in the respective component spring assembly.

6. Trailer according to one of Claims 1 to 5, **characterized in that** the control device determines first measured values in a first measuring state with identical air pressure values in both component spring assemblies.

7. Trailer according to one of Claims 1 to 6, **characterized in that** the control device determines second measured values in at least one measuring state with different air pressures between the two component spring assemblies.

8. Trailer according to Claim 7, **characterized in that** the control device sets different air pressures in the component spring arrangements in accordance with the first measured values in order to determine second measured values.

9. Trailer according to one of Claims 1 to 8, **characterized in that** the control device determines measured values in a measuring pass in at least one measuring state with a relatively high air pressure and one measuring state with a relatively low air pressure in the first component spring arrangement compared to the air pressure in the second component spring arrangement.

10. Trailer according to one of Claims 1 to 9, **characterized in that** the control device determines measured values in a measuring pass in at least three different measuring states.

11. Trailer according to one of Claims 1 to 10, **characterized in that** the control device derives control values on the basis of a stored tabular assignment of measured values to control values.

12. Trailer according to one of Claims 1 to 11, **characterized in that** the control device derives control values from the measured values or from values derived therefrom, in accordance with a stored optimization rule.

13. Trailer according to one of Claims 1 to 12, **characterized in that** a measuring pass can be controlled by means of an operating element.

14. Trailer according to one of Claims 1 to 13, **characterized in that** a measuring pass can be initiated automatically by the control device in accordance with one or more predefinable events.

15. Trailer according to Claim 14, **characterized in that** a measuring pass can be initiated after the suspension and renewed connection of an electric power supply and/or of a compressed air supply from a traction vehicle.

16. Trailer according to Claim 14 or 15, **characterized in that** a measuring pass can be initiated automatically after the stationary state of the trailer over a predefinable minimum time.

17. Trailer according to one of Claims 1 to 16, **characterized in that** initiation of a measuring pass is blocked when a trailer is travelling.

18. Trailer according to one of Claims 1 to 17, **characterized in that** control values and/or measured values can be stored in the control device and changes in a current measuring pass can be evaluated compared to stored values from a preceding measuring pass and/or displayed.

19. Trailer according to one of Claims 1 to 18, **characterized in that** in the event of the derivation of the control values revealing that no driving mode setting of the component spring assemblies is possible with a permissible supporting load, the control device brings about a warning signal and/or triggers an immobilizer.

20. Trailer according to one of Claims 1 to 19, **characterized in that** a third axle with a third component spring assembly is present.

21. Trailer according to Claim 20, **characterized in that** the third component spring assembly can be controlled separately by the control device and/or **in that** measured values can be determined separately for the third axle.

22. Trailer according to Claim 21, **characterized in that** the same air pressure can be applied to the third component spring assembly as to the first or the second component spring assembly.

23. Trailer according to one of Claims 1 to 22, **characterized in that** the trailer is a central axle trailer with a towbar coupling.

24. Trailer according to one of Claims 1 to 23, **characterized in that** the trailer is a semi-trailer with a fifth wheel plate.

25. Control device for controlling a pneumatic spring assembly having at least two component spring assemblies in a utility vehicle trailer according to one of the preceding claims.

## Revendications

1. Remorque de véhicule utilitaire
- comprenant un châssis (CH) qui peut s'appuyer sur un véhicule tracteur par des moyens d'accouplement (ZD, KP) avec une charge d'appui (FD),
- comprenant un arrangement à plusieurs essieux qui inclut au moins un premier essieu avant (A1) et un deuxième essieu arrière (A2),
- comprenant un arrangement d'amortisseurs pneumatiques (B1, B2) qui soutient le châssis (CH) par rapport aux deux essieux, lequel inclut un premier arrangement d'amortisseurs partiel (B1) associé au premier essieu (A1) et un deuxième arrangement d'amortisseurs partiel (B2) associé au deuxième essieu (A2),
- comprenant un arrangement de capteurs qui est conçu pour mesurer les forces d'appui d'essieu (R1, R2) des deux essieux (A1, A2),
- comprenant des moyens de commande pneumatiques (E1, AL1, E2, AL2) qui sont conçus pour solliciter séparément les deux arrangements d'amortisseurs partiels,
- comprenant un dispositif de commande (SE) qui est conçu pour commander les moyens de commande en vue de régler des valeurs variables de la pression d'air dans les arrangements d'amortisseurs partiels (B1, B2) pour les états suspendus du châssis, **caractérisée en ce que** le dispositif de commande est conçu pour effectuer un cycle de mesure et détermine à cette occasion plusieurs valeurs mesurées qui dépendent du poids total et/ou de la position longitudinale du centre de gravité du poids total de la remorque, et **en ce que** le dispositif de commande dérive à partir des valeurs mesurées, d'après une règle d'association mise en mémoire, des valeurs de commande pour régler des valeurs de consigne de la pression des arrangements d'amortisseurs partiels pour le mode de déplacement et règle les pressions dans les arrangements d'amortisseurs pneumatiques aux valeurs de consigne de la pression.

2. Remorque selon la revendication 1, **caractérisée en ce que** la règle d'association est prédéfinie de telle sorte que lors du réglage des valeurs de consigne de la pression dérivées d'après elle, la charge d'appui au niveau de l'accouplement de la remorque du véhicule tracteur se trouve dans une plage admissible prédéfinie.

3. Remorque selon la revendication 1 ou 2, **caractérisée en ce que** le dispositif de commande règle au moins deux états de mesure suspendus différents pendant le cycle de mesure, lesquels se différentient dans les rapports des pressions d'air des arrangements d'amortisseurs partiels, et détermine les valeurs mesurées dans les deux états de mesure.

4. Remorque selon l'une des revendications 1 à 3, **caractérisée en ce que** le dispositif de commande détermine comme valeurs mesurées les valeurs de pression mesurées des pressions d'air dans les arrangements d'amortisseurs partiels.

5. Remorque selon l'une des revendications 1 à 4, **caractérisée en ce qu'**au moins un capteur de pression (D1, D2) est associé à chacun des deux arrangements d'amortisseurs partiels (B1, B2), lequel délivre un signal de mesure au dispositif de commande en vue de générer un signal de mesure dépendant de la pression d'air dans l'arrangement d'amortisseurs partiel respectif.

6. Remorque selon l'une des revendications 1 à 5, **caractérisée en ce que** le dispositif de commande détermine des premières valeurs mesurées dans un premier état de mesure avec des valeurs de pression d'air identiques dans les deux arrangements d'amortisseurs partiels.

7. Remorque selon l'une des revendications 1 à 6, **caractérisée en ce que** le dispositif de commande détermine des deuxièmes valeurs mesurées dans au moins un état de mesure avec des pressions d'air différentes entre les deux arrangements d'amortisseurs partiels.

8. Remorque selon la revendication 7, **caractérisée en ce que** le dispositif de commande règle des pressions d'air différentes dans les arrangements d'amortisseurs partiels conformément aux premières valeurs mesurées en vue de déterminer les deuxièmes valeurs mesurées.

9. Remorque selon l'une des revendications 1 à 8, **caractérisée en ce que** le dispositif de commande détermine les valeurs mesurées dans un cycle de mesure dans au moins un état de mesure où la pression d'air est plus élevée et un état de mesure où la pression d'air est plus faible dans le premier arrangement d'amortisseurs partiel par rapport à la pression d'air dans le deuxième arrangement d'amortisseurs partiel.

10. Remorque selon l'une des revendications 1 à 9, **caractérisée en ce que** le dispositif de commande détermine les valeurs mesurées dans un cycle de mesure dans au moins trois états de mesure différents.

11. Remorque selon l'une des revendications 1 à 10, **caractérisée en ce que** le dispositif de commande dérive les valeurs de commande au moyen d'une association des valeurs mesurées aux valeurs de commande sous la forme d'un tableau mis en mémoire.

12. Remorque selon l'une des revendications 1 à 11, **caractérisée en ce que** le dispositif de commande dérive les valeurs de commande conformément à une règle d'optimisation mise en mémoire à partir des valeurs mesurées ou de valeurs dérivées de celles-ci.

13. Remorque selon l'une des revendications 1 à 12, **caractérisée en ce qu'**un cycle de mesure peut être commandé par le biais d'un élément de commande.

14. Remorque selon l'une des revendications 1 à 13, **caractérisée en ce qu'**un cycle de mesure peut être initié automatiquement par le dispositif de mesure conformément à un ou plusieurs événements pouvant être prédéfinis.

15. Remorque selon la revendication 14, **caractérisée en ce qu'**un cycle de mesure peut être initié depuis un véhicule tracteur après la disparition et un nouveau branchement d'une source d'alimentation électrique et/ou d'une source d'alimentation pneumatique.

16. Remorque selon la revendication 14 ou 15, **caractérisée en ce qu'**un cycle de mesure peut être initié automatiquement après un arrêt de la remorque pendant une durée minimale pouvant être prédéfinie.

17. Remorque selon l'une des revendications 1 à 16, **caractérisée en ce que** l'initiation d'un cycle de mesure est bloquée lorsque la remorque est en déplacement.

18. Remorque selon l'une des revendications 1 à 17, **caractérisée en ce que** les valeurs de commande et/ou les valeurs mesurées peuvent être mises en mémoire dans le dispositif de commande et les modifications dans un cycle de mesure actuel par rapport aux valeurs mises en mémoire d'un cycle de mesure précédent peuvent être interprétées et/ou affichées.

19. Remorque selon l'une des revendications 1 à 18, **caractérisée en ce que** dans le cas où il résulte de la dérivation des valeurs de commande qu'un réglage de mode de déplacement des arrangements d'amortisseurs partiels avec une charge d'appui admissible est impossible, le dispositif de commande produit un signal d'alerte et/ou déclenche un blocage du démarrage.

20. Remorque selon l'une des revendications 1 à 19, **caractérisée en ce qu'**il existe un troisième essieu avec un troisième arrangement d'amortisseurs partiel.

21. Remorque selon la revendication 20, **caractérisée en ce que** le troisième arrangement d'amortisseurs partiel peut être commandé séparément par le dispositif de commande et/ou **en ce que** les valeurs mesurées associées au troisième essieu peuvent être déterminées séparément.

22. Remorque selon la revendication 21, **caractérisée en ce que** le troisième arrangement d'amortisseurs partiel peut être sollicité avec la même pression d'air que le premier ou le deuxième arrangement d'amortisseurs partiel.

23. Remorque selon l'une des revendications 1 à 22, **caractérisée en ce que** la remorque est une remorque à essieu central munie d'un accouplement à timon.

24. Remorque selon l'une des revendications 1 à 23, **caractérisée en ce que** la remorque est une semi-remorque munie d'une sellette d'attelage.

25. Dispositif de commande pour commander un arrangement d'amortisseurs pneumatiques comprenant au moins deux arrangements d'amortisseurs partiels dans une remorque de véhicule utilitaire selon l'une des revendications précédentes.
